# EUROPÄISCHE PATENTSCHRIFT

(11) **EP 2 493 730 B1**
(45) Veröffentlichungstag und Bekanntmachung des Hinweises auf die Patenterteilung: **12.08.2015**
(21) Anmeldenummer: 10762683.0
(22) Anmeldetag: 07.10.2010
(51) Int. Cl.: B60S 1/34

(54) **SCHEIBENWISCHVORRICHTUNG IN EINEM FAHRZEUG**
WINDSHIELD WIPER DEVICE IN A VEHICLE
DISPOSITIF ESSUIE-GLACE DANS UN VÉHICULE

(30) Priorität: 29.10.2009 DE 102009046153
(43) Veröffentlichungstag der Anmeldung: 05.09.2012
(73) Patentinhaber: Robert Bosch GmbH, 70442 Stuttgart (DE)
(72) Erfinder: KRAEMER, Godelieve, 76549 Huegelsheim (DE)
(86) Internationale Anmeldenummer: PCT/EP2010/065017
(87) Internationale Veröffentlichungsnummer: WO 2011/051093

(56) Entgegenhaltungen:
- EP-A1- 0 301 131
- EP-A2- 1 008 500
- DE-A1- 19 838 292
- FR-A5- 2 050 604
- US-A- 5 319 851

## Beschreibung

Die Erfindung bezieht sich auf eine Scheibenwischvorrichtung in einem Fahrzeug nach dem Oberbegriff des Anspruches 1.

### Stand der Technik

Scheibenwischvorrichtungen, die in Fahrzeugen zur Reinigung der Front- oder Heckscheibe eingesetzt werden, umfassen einen Wischerarm, der gelenkig an einer Wischerwelle gelagert ist und über den Antrieb eines Scheibenwischergestänges eine Drehpendelbewegung um die Gelenkanordnung ausführt. Um die Lagerkräfte über einen langen Betriebszeitraum ohne Einschränkung der Wischertätigkeit aufnehmen zu können, werden im Bereich der Gelenkanordnung Stahlbuchsen eingesetzt, in denen die Wischerwelle schwenkbar aufgenommen ist, wobei zur Reibungsreduzierung die Buchseninnenseite mit einer Beschichtung versehen sein kann. Die Buchse wird üblicherweise in ein Befestigungsteil des Wischergestänges eingesetzt, das als Gussteil ausgeführt ist, wobei die Bohrung bei der Herstellung des Gussteils üblicherweise nachbearbeitet werden muss, um die Stahlbuchse aufnehmen zu können. Auch im Falle eines aus Blech bestehenden Befestigungsteils zur Aufnahme der Buchse ist eine Nachbearbeitung der Bohrungen im Befestigungsteil erforderlich.

DE-A-198 38 292 offenbart den Oberbegriff des Anspruchs 1.

### Offenbarung der Erfindung

Der Erfindung liegt die Aufgabe zu Grunde, eine Scheibenwischvorrichtung in einem Fahrzeug mit einfachen Maßnahmen so auszuführen, dass die Wischbewegung des Wischerarms über einen langen Betriebszeitraum ohne Einschränkung ausgeführt werden kann.

Diese Aufgabe wird erfindungsgemäß mit den Merkmalen des Anspruches 1 gelöst. Die Unteransprüche geben zweckmäßige Weiterbildungen an.

Die erfindungsgemäße Scheibenwischvorrichtung wird in einem Fahrzeug insbesondere zum Wischen der Frontscheibe oder der Heckscheibe des Fahrzeugs eingesetzt. Die Scheibenwischvorrichtung umfasst einen über ein Gelenk gelagerten Wischerarm, der bei Betätigung der Vorrichtung die Wischbewegung ausführt, wobei das Gelenk des Wischerarms eine Lagerbuchse zur Aufnahme einer Wischer- bzw. Lagerwelle umfasst. Die Lagerwelle ist üblicherweise am Wischerarm angeordnet und innerhalb der Lagerbuchse drehbar gelagert, wobei die Lagerbuchse in eine Ausnehmung eines Befestigungsteils einsetzbar ist, das Teil der Scheibenwischvorrichtung und vorzugsweise fahrzeug- bzw. karosseriefest angeordnet ist.

Erfindungsgemäß ist vorgesehen, dass die Lagerbuchse aus Kunststoff gefertigt ist und an der Buchsenwandung mindestens ein Verformungselement zur radialen Anpassung des Außendurchmessers der Lagerbuchse angeformt ist. Die Ausführung aus Kunststoff weist verschiedene Vorteile auf, nämlich die kostengünstige und leichte Herstellbarkeit, das geringe Gewicht, die geringe Reibung der aufgenommenen Lagerwelle sowie innerhalb definierter Grenzen eine Verformungsfähigkeit, welche zur radialen Anpassung des Außendurchmessers der Lagerbuchse im Bereich des Verformungselementes ausgenutzt werden kann, welches einteilig mit der Buchsenwandung ausgeführt ist. Die Verformungsfähigkeit der Lagerbuchse, welche durch die Materialwahl sowie die konstruktive Ausführung des Verformungselements an der Buchsenwandung erzielt wird, erlaubt ein Einpressen der Lagerbuchse in die Ausnehmung in dem Befestigungsteil, wobei während des Einpressens die Buchsenwandung radial verformt wird, insbesondere der radiale Außendurchmesser der Lagerbuchse zumindest abschnittsweise reduziert wird. Auf Grund der Verformbarkeit der Außenwandung der Lagerbuchse kann eine aufwändige Nachbearbeitung der Ausnehmung in dem Befestigungsteil entfallen. Dies stellt eine erhebliche Vereinfachung des Herstellungsprozesses und damit eine kostengünstige Ausführung dar.

Die Lagerbuchse besteht zweckmäßigerweise aus einem wärmebeständigen Kunststoff, welcher auch bei höheren Temperaturen keine signifikanten Verformungen durch Relaxieren aufweist. Dadurch ist sichergestellt, dass die Kunststoffbuchse auch bei einem Verweilen der Scheibenwischvorrichtungsteile in einer Lackieranlage und den dort herrschenden höheren Temperaturen ihre ursprüngliche Form behält. Die Außendurchmesserreduzierung wird allein durch mechanische Kräfte beim Einpressen der Kunststoffbuchse in die Ausnehmung im Befestigungsteil erzielt. Des Weiteren muss über die Materialwahl sichergestellt sein, dass auch ohne Beschichtung der Kunststoffinnenseite in der Lagerbuchse eine reibungsarme Aufnahme der Lagerwelle gewährleistet ist.

Die Kunststoffbuchse kann im Spritzverfahren oder Extrusionsverfahren hergestellt werden und entweder als Ein-Stoff-Bauteil oder Mehr-Stoff-Bauteil ausgeführt sein.

Gemäß bevorzugter Ausführung weist die Lagerbuchse im Bereich des Verformungselementes eine geänderte Wandstärke auf. Beispielsweise kann am Außenmantel der Lagerbuchse eine radial überragende Erhebung ausgebildet sein, die das Verformungselement bildet. Diese Erhebung erstreckt sich zweckmäßigerweise über ein schmal begrenztes Winkelsegment und ist beispielsweise als noppenförmige oder dreieckförmige Erhebung ausgeführt. Die Erhebung wird mit dem Einsetzen der Lagerbuchse in die Ausnehmung im Befestigungsteil radial nach innen kraftbeaufschlagt, wodurch sich das Material des Verformungselementes verformt und radial abgeflacht wird.

Der Innenmantel der Lagerbuchse ist zweckmäßigerweise glattflächig ohne Durchbrechungen oder Erhebungen ausgeführt. Gleichwohl kann es gemäß einer weiteren Ausführungsvariante zweckmäßig sein, am Innenmantel über ein begrenztes Winkelsegment Ausnehmungen vorzusehen, die sich insbesondere in Achsrichtung erstrecken und beispielsweise als Nuten ausgeführt sind, so dass der Innenmantel an der Position der Ausnehmung einen zumindest geringfügig größeren Durchmesser hat. Auf der Außenseite der Lagerbuchse befinden sich in dieser Ausführungsvariante zweckmäßigerweise radial überragende Erhebungen, die die Verformungselemente bilden, so dass insgesamt eine annähernd konstante Wandstärke erreicht wird.

Gemäß einer weiteren zweckmäßigen Ausführung ist das Verformungselement als Einschnitt am Außenmantel der Buchsenwandung ausgebildet, über die die Wandstärke der Buchsenwandung an dieser Position zumindest geringfügig reduziert ist. Der Einschnitt erlaubt eine erleichterte Durchmesserreduzierung beim Einpressen der Lagerbuchse in die zugeordnete Ausnehmung im Befestigungsteil der Scheibenwischvorrichtung. Hierbei kann es vorteilhaft sein, dass der Einschnitt sich in tangentialer Richtung erstreckt, wobei die den Einschnitt radial nach außen begrenzende Wandung der Lagerbuchse sich in erleichterter Weise radial verformen kann, insbesondere radial nach innen gebogen werden kann.

Zusätzlich oder alternativ ist es auch möglich, dass der Einschnitt sich in Radialrichtung ohne tangentiale Komponente erstreckt, wobei den Einschnitt seitlich begrenzende Wandungen an der Lagerbuchse sich bei einer entsprechenden Kraftbeaufschlagung während des Einpressens in die Ausnehmung radial verformen können.

Der Einschnitt erstreckt sich vorzugsweise in Radialrichtung nur über einen Teil der Wandstärke der Lagerbuchse, so dass der Einschnitt die Lagerbuchsenwandung nicht vollständig durchdringt. Dies hat den Vorteil, dass die Stabilität der Lagerbuchse nicht oder zumindest nicht signifikant eingeschränkt ist und dass darüber hinaus eine optimale Lagerung der im Inneren der Lagerbuchse aufgenommenen Lagerwelle gewährleistet ist. Gleichwohl kann es aber auch zweckmäßig sein, zumindest im Bereich einer Stirnseite der Lagerbuchse Einschnitte vorzusehen, die die Wandung vollständig radial durchdringen. Dies verbessert die radiale Verformbarkeit der Lagerbuchse in diesem Bereich. Gegebenenfalls sind im Bereich beider Stirnseiten derartige Einschnitte vorgesehen.

Die Einschnitte erstrecken sich, ebenso wie die radialen Erhebungen an der Außenseite der Lagerbuchse, entweder nur über eine axiale Teillänge der Lagerbuchse oder aber über die gesamte axiale Länge der Lagerbuchse. Möglich ist es auch, dass zum einen über den Umfang verteilt eine Mehrzahl von Verformungselementen vorgesehen sind und zum andern in Achsrichtung der Lagerbuchse gesehen mehrere Verformungselemente vorgesehen sind, die sich jeweils nur über eine axiale Teillänge erstrecken.

Gemäß einer weiteren zweckmäßigen Ausführung ist vorgesehen, dass die Lagerbuchse über ihre axiale Länge einen veränderlichen Außendurchmesser aufweist, ungeachtet der Verformungselemente, die am Außenmantel der Lagerbuchse angeformt sind. Der Außenmantel besitzt in dieser Ausführung vorzugsweise Konusform, wohingegen bei einer Ausbildung mit konstantem Radius die Lagerbuchse Zylinderform aufweist.

Weitere Vorteile und zweckmäßige Ausführungen sind den weiteren Ansprüchen, der Figurenbeschreibung und den Zeichnungen zu entnehmen. Es zeigen:
- Fig. 1: eine Seitenansicht eines Wischerarms einer Scheibenwischvorrichtung, wobei der Wischerarm über ein Gelenk mit einem Befestigungsteil der Scheibenwischvorrichtung gelenkig verbunden ist,
- Fig. 2: eine Einzeldarstellung im Bereich der gelenkigen Lagerung des Wischerarms,
- Fig. 3: eine Schnittdarstellung gemäß Schnittlinie III-III aus Fig. 2,
- Fig. 4: einen Schnitt durch eine Lagerbuchse mit noppenförmigen radialen Erhebungen am Außenmantel,
- Fig. 5: einen Schnitt durch eine Lagerbuchse mit tangentialen Einschnitten,
- Fig. 6: einen Schnitt durch eine Lagerbuchse mit noppenförmigen Erhebungen an der Außenseite und an gleicher Stelle am Innenmantel angeordneten Nuten,
- Fig. 7: einen Schnitt durch eine Lagerbuchse mit zwei gegenüberliegenden radialen Einschnitten im Bereich des Außenmantels,
- Fig. 8: einen Schnitt durch eine Lagerbuchse mit dreieckförmigen Erhebungen am Außenmantel,
- Fig. 9: einen Längsschnitt durch eine zylindrische Lagerbuchse,
- Fig. 10: einen Längsschnitt durch eine Lagerbuchse mit teilweise konischem Außenmantel,
- Fig. 11: eine aus zwei Einzelteilen bestehende Lagerbuchse mit jeweils einem stirnseitigen, radial erweiterten Kragen,
- Fig. 12: einen Längsschnitt durch eine Lagerbuchse mit im Bereich beider axialer Stirnseiten eingebrachten radialen Einschnitten,
- Fig. 13: eine Ansicht auf die Stirnseite der Lagerbuchse nach Fig. 12.

In den Figuren sind gleiche Bauteile mit gleichen Bezugszeichen versehen.

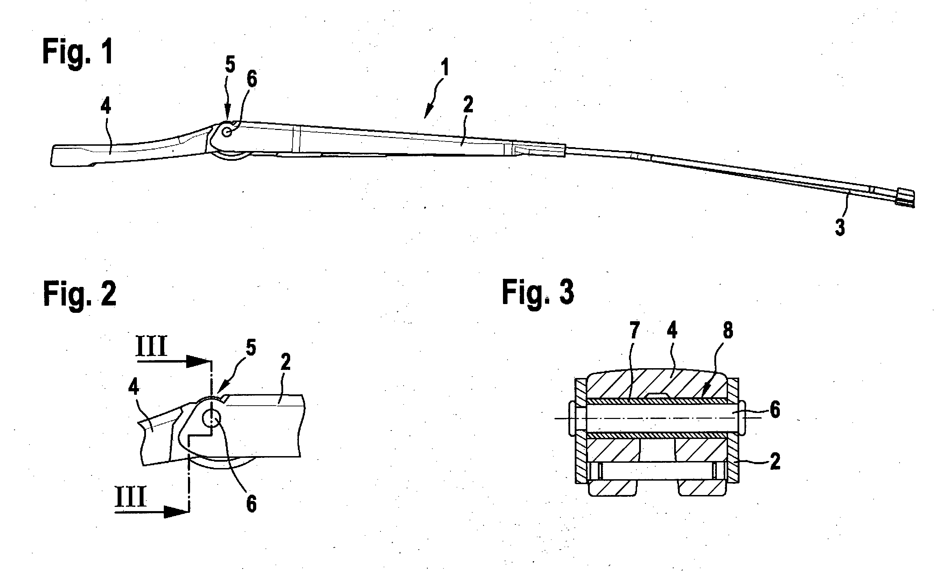

Fig. 1 zeigt einen Ausschnitt einer Scheibenwischvorrichtung 1 in einem Fahrzeug zum Wischen der Frontscheibe oder Heckscheibe. Die Scheibenwischvorrichtung 1 umfasst einen Wischerarm 2, der Träger eines Wischblattes 3 ist und über ein Gelenk 5 drehbeweglich an einem Befestigungsteil 4 der Scheibenwischvorrichtung 1 angelenkt ist. Das Befestigungsteil 4 ist insbesondere fahrzeug- bzw. karosseriefest in der Scheibenwischvorrichtung 1 gehalten.

Wie Fig. 1 in Verbindung mit Fig. 2 und Fig. 3 zu entnehmen, weist das Gelenk 5 eine Wischer- bzw. Lagerwelle 6 auf, welche in einer Lagerbuchse 7 drehbar gelagert ist. Die Lagerwelle 6 ist fest mit dem Wischerarm 2 verbunden, die Lagerbuchse 7 ist in einer Ausnehmung 8 aufgenommen, die in das Befestigungsteil 4 im Bereich des Gelenks 5 eingebracht ist. Das Befestigungsteil 4 ist beispielsweise als Gussteil ausgeführt, wohingegen die Lagerbuchse 7 aus Kunststoff gefertigt ist, insbesondere aus einem wärmebeständigen Kunststoff.

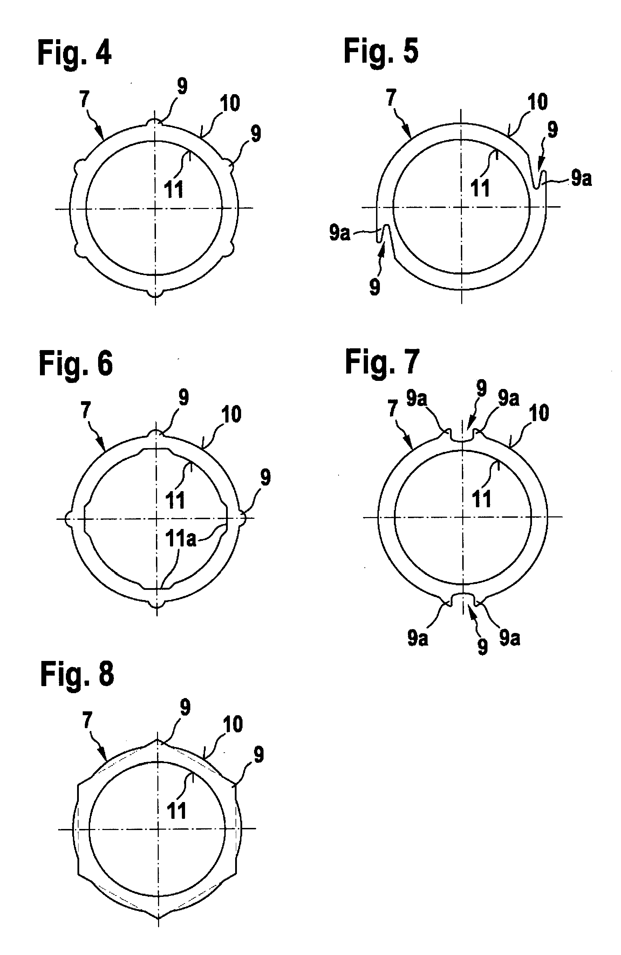

In den Figuren 4 bis 8 sind verschiedene Ausführungsvarianten von Kunststoff-Lagerbuchsen 7 im Schnitt quer zur Längsachse dargestellt. Gemäß Fig. 4 sind am Außenmantel 10 der Lagerbuchse 7 über den Außenumfang verteilt eine Mehrzahl von Verformungselementen 9 in Form von noppenförmigen Erhebungen einstückig angeformt. Insgesamt sind über den Umfang verteilt sechs im gleichen Winkelabstand angeordnete noppenförmige Erhebungen 9 vorgesehen. Die noppenförmigen Erhebungen 9 erheben sich radial gegenüber dem Außenmantel 10 nach außen, wobei der radiale Überstand geringer ist als die Wandstärke der Lagerbuchse 7 und beispielsweise nicht mehr als die Hälfte oder ein Drittel oder ein Viertel der Wandstärke der Lagerbuchse beträgt. Die Verformungselemente 9 werden während des Herstellungsprozesses der Lagerbuchse 7 im Extrusions- oder Spritzgussverfahren angeformt.

Im Ausführungsbeispiel gemäß Fig. 5 bilden die Verformungselemente 9 in Tangentialrichtung verlaufende Einschnitte in der Wandung der Lagerbuchse, wodurch radial außen liegende Vorsprünge 9a in der Buchsenwandung gebildet sind, die ggf. geringfügig radial über den Außenmantel 10 überstehen können.
Mit dem Einpressen in eine Ausnehmung im Befestigungsteil werden die Vorsprünge 9a radial nach innen gedrückt. Es sind insgesamt zwei diametral gegenüberliegende Verformungselemente 9 in Form eines tangentialen Einschnittes vorgesehen.

Im Ausführungsbeispiel gemäß Fig. 6 sind die Verformungselemente 9 ähnlich wie im Ausführungsbeispiel gemäß Fig. 4 als noppenförmige Erhebungen am Außenmantel 10 angeformt. Insgesamt sind über den Umfang verteilt vier noppenförmige Erhebungen vorgesehen. Der Innenmantel 11 ist in Abweichung der sonstigen, glattflächigen Ausführung mit Nuten 11a versehen, die den noppenförmigen Erhebungen 9 gegenüberliegend angeordnet sind. Dadurch ergibt sich über den Umfang der Lagerbuchse 7 eine zumindest annähernd gleich bleibende Wandstärke.

Im Ausführungsbeispiel gemäß Fig. 7 sind analog zu Fig. 5 zwei diametral gegenüberliegende Verformungselemente 9 in Form von Einschnitten vorgesehen, die jedoch sich in Radialrichtung erstrecken. Jeder Einschnitt ist von zwei Vorsprüngen 9a begrenzt, die sich radial über die Mantelfläche 10 erheben.

Im Ausführungsbeispiel gemäß Fig. 8 sind über den Umfang gleichmäßig verteilt mehrere Erhebungen 9 am Außenmantel 10 angeformt, die sich radial über den Außenmantel 10 erheben, jedoch im Unterschied zum Ausführungsbeispiel gemäß Fig. 4 oder Fig. 6 einen dreieckförmigen Querschnitt besitzen.

In allen vorgenannten Ausführungsbeispielen können sich die Verformungselemente 9 axial entweder über die gesamte axiale Länge der Lagerbuchse 7 oder über eine axiale Teillänge erstrecken.

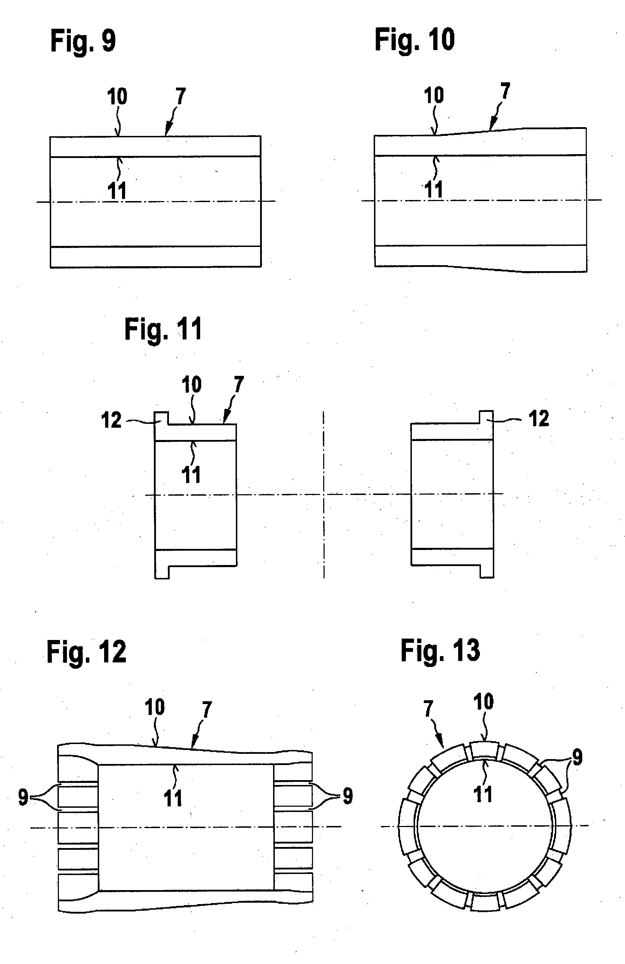

In den Figuren 9, 10 und 11 ist jeweils eine Lagerbuchse 7 im Längsschnitt dargestellt. Gemäß Fig. 9 ist die Lagerbuchse 7 als Hohlzylinder ausgeführt, mit einem über die axiale Länge gleich bleibenden Innendurchmesser und einem gleich bleibenden Außendurchmesser.

Gemäß Fig. 10 besitzt die Lagerbuchse 7 nur einen gleich bleibenden Innendurchmesser, wohingegen der Außendurchmesser abschnittsweise veränderlich ausgeführt ist, insbesondere konusförmig. Der konusförmige Abschnitt erstreckt sich mit Abstand zu den stirnseitigen Bereichen, in denen der Außendurchmesser zylindrisch geformt ist.

In Fig. 11 ist die Lagerbuchse 7 zweiteilig ausgeführt, wobei die beiden Lagerbuchsenteile zueinander spiegelsymmetrisch angeordnet sind. Jedes Lagerbuchsenteil weist an seiner einen Stirnseite einen radial erweiterten Kragen 12 auf.

Im Ausführungsbeispiel gemäß Fig. 12 und 13 weist die Lagerbuchse 7 im Bereich beider Stirnseiten Verformungselemente 9 in Form von sich in Achsrichtung erstreckenden Einschnitten auf, welche sich radial vollständig durch die Lagerbuchsenwandung hindurch erstrecken. Dadurch ist in Radialrichtung eine gute radiale Verformbarkeit im Bereich der Stirnseiten gegeben. Die Verformungselemente 9 erstrecken sich ausgehend von den Stirnseiten nur über eine axiale Teillänge.

Der Außendurchmesser ist über die axiale Länge nicht konstant, sondern im zwischenliegenden Bereich außerhalb der Einschnitte 9 konusförmig ausgeführt. Im Bereich der Stirnseiten, die die Einschnitte 9 aufweisen, ist der Außenmantel zylindrisch ausgeführt.

## Patentansprüche

1. Scheibenwischvorrichtung in einem Fahrzeug, mit einem über ein Gelenk gelagerten Wischerarm (2), wobei das Gelenk (5) des Wischerarms (2) eine Lagerbuchse (7) zur Aufnahme einer Lagerwelle (6) umfasst, wobei die in eine Ausnehmung (8) in einem Befestigungsteil (4) einsetzbare Lagerbuchse (7) aus Kunststoff gefertigt ist, **dadurch gekennzeichnet, dass** an der Buchsenwandung mindestens ein Verformungselement (9) zur radialen Anpassung des Außendurchmessers der Lagerbuchse (7) angeformt ist.

2. Scheibenwischvorrichtung nach Anspruch 1, **dadurch gekennzeichnet, dass** die Lagerbuchse (7) im Bereich des Verformungselements (9) eine geänderte Wandstärke aufweist.

3. Scheibenwischvorrichtung nach Anspruch 1 oder 2, **dadurch gekennzeichnet, dass** das Verformungselement (9) als eine den Außenmantel (10) der Lagerbuchse (7) radial überragende Erhebung ausgebildet ist.

4. Scheibenwischvorrichtung nach einem der Ansprüche 1 bis 3, **dadurch gekennzeichnet, dass** das Verformungselement (9) als Einschnitt in der Buchsenwandung ausgebildet ist.

5. Scheibenwischvorrichtung nach Anspruch 4, **dadurch gekennzeichnet, dass** der Einschnitt in tangentialer Richtung verläuft.

6. Scheibenwischvorrichtung nach Anspruch 4 oder 5, **dadurch gekennzeichnet, dass** sich der Einschnitt in Radialrichtung erstreckt.

7. Scheibenwischvorrichtung nach einem der Ansprüche 4 bis 6, **dadurch gekennzeichnet, dass** sich der Einschnitt in Achsrichtung erstreckt.

8. Scheibenwischvorrichtung nach einem der Ansprüche 4 bis 7, **dadurch gekennzeichnet, dass** der Einschnitt die Buchsenwandung vollständig durchdringt.

9. Scheibenwischvorrichtung nach Anspruch 8, **dadurch gekennzeichnet, dass** der Einschnitt benachbart zu einer Stirnseite der Lagerbuchse (7) angeordnet ist.

10. Scheibenwischvorrichtung nach einem der Ansprüche 1 bis 9, **dadurch gekennzeichnet, dass** über den Umfang verteilt mehrere Verformungselemente (9) vorgesehen sind.

11. Scheibenwischvorrichtung nach einem der Ansprüche 1 bis 10, **dadurch gekennzeichnet, dass** die Lagerbuchse (7) über ihre axiale Länge einen veränderlichen Außendurchmesser aufweist.

12. Scheibenwischvorrichtung nach einem der Ansprüche 1 bis 11, **dadurch gekennzeichnet, dass** der Innenmantel (11) zumindest über eine axiale Teillänge glattflächig ausgebildet ist.

## Claims

1. Windscreen wiper apparatus in a vehicle, having a wiper arm (2) which is mounted by way of a joint, wherein the joint (5) of the wiper arm (2) comprises a bearing bushing (7) for receiving a bearing shaft (6), wherein the bearing bushing (7), which can be inserted into a recess (8) in a fastening part (4), is manufactured from plastic, **characterized in that**, on the bushing wall, there is integrally formed at least one deformation element (9) for radial adaptation of the outer diameter of the bearing bushing (7).

2. Windscreen wiper apparatus according to Claim 1, **characterized in that** the bearing bushing (7) has a changed wall thickness in the region of the deformation element (9).

3. Windscreen wiper apparatus according to Claim 1 or 2, **characterized in that** the deformation element (9) is in the form of an elevation which projects radially beyond the outer surface (10) of the bearing bushing (7).

4. Windscreen wiper apparatus according to one of Claims 1 to 3, **characterized in that** the deformation element (9) is in the form of an indentation in the bushing wall.

5. Windscreen wiper apparatus according to Claim 4, **characterized in that** the indentation runs in a tangential direction.

6. Windscreen wiper apparatus according to Claim 4 or 5, **characterized in that** the indentation extends in a radial direction.

7. Windscreen wiper apparatus according to one of Claims 4 to 6, **characterized in that** the indentation extends in an axial direction.

8. Windscreen wiper apparatus according to one of Claims 4 to 7, **characterized in that** the indentation extends all the way through the bushing wall.

9. Windscreen wiper apparatus according to Claim 8, **characterized in that** the indentation is arranged adjacent to an end side of the bearing bushing (7).

10. Windscreen wiper apparatus according to one of Claims 1 to 9, **characterized in that** multiple deformation elements (9) are provided so as to be distributed over the circumference.

11. Windscreen wiper apparatus according to one of Claims 1 to 10, **characterized in that** the bearing bushing (7) has a varying outer diameter over its axial length.

12. Windscreen wiper apparatus according to one of Claims 1 to 11, **characterized in that** the inner surface (11) is of smooth form at least over a part of the axial length.

## Revendications

1. Dispositif d'essuie-glace dans un véhicule, avec un bras d'essuie-glace (2) mis en place via une articulation, l'articulation (5) du bras d'essuie-glace (2) comprenant un coussinet (7) pour recevoir un arbre de palier (6), le coussinet (7) pouvant être inséré dans un évidement (8) dans une partie de fixation (4) fabriquée en matière plastique, **caractérisé en ce qu'**au moins un élément de déformation (9) est réalisé au niveau de la paroi de coussinet pour l'adaptation radiale du diamètre extérieur du coussinet (7).

2. Dispositif d'essuie-glace selon la revendication 1, **caractérisé en ce que** le coussinet (7) comporte une épaisseur de paroi modifiée dans la région de l'élément de déformation (9).

3. Dispositif d'essuie-glace selon la revendication 1 ou 2, **caractérisé en ce que** l'élément de déformation (9) prend la forme d'un soulèvement dépassant de l'enveloppe extérieure (10) du coussinet (7) dans le plan radial.

4. Dispositif d'essuie-glace selon l'une quelconque des revendications 1 à 3, **caractérisé en ce que** l'élément de déformation (9) prend la forme d'une entaille dans la paroi de coussinet.

5. Dispositif d'essuie-glace selon la revendication 4, **caractérisé en ce que** l'entaille dans la direction tangentielle.

6. Dispositif d'essuie-glace selon la revendication 4 ou 5, **caractérisé en ce que** l'entaille s'étend dans la direction radiale.

7. Dispositif d'essuie-glace selon l'une quelconque des revendications 4 à 6, **caractérisé en ce que** l'entaille s'étend dans la direction axiale.

8. Dispositif d'essuie-glace selon l'une quelconque des revendications 4 à 7, **caractérisé en ce que** l'entaille traverse entièrement la paroi de coussinet.

9. Dispositif d'essuie-glace selon la revendication 8, **caractérisé en ce que** l'entaille est disposée à côté d'un côté avant du coussinet (7).

10. Dispositif d'essuie-glace selon l'une quelconque des revendications 1 à 9, **caractérisé en ce que** plusieurs éléments de déformation (9) sont prévus de façon répartie sur l'ensemble de la périphérie.

11. Dispositif d'essuie-glace selon l'une quelconque des revendications 1 à 10, **caractérisé en ce que** le coussinet (7) comporte un diamètre extérieur variable sur toute sa longueur axiale.

12. Dispositif d'essuie-glace selon l'une quelconque des revendications 1 à 11, **caractérisé en ce que** l'enveloppe intérieure (11) est réalisée à plat au moins sur une longueur axiale partielle.
